# EUROPÄISCHE PATENTANMELDUNG

(11) **EP 0 760 572 A2**
(43) Veröffentlichungstag der Anmeldung: **05.03.1997**
(21) Anmeldenummer: 96114156.1
(22) Anmeldetag: 04.09.1996
(51) Int. Cl.: H04M 3/44, H04M 3/42

(54) **Adressierungssystem für Anschlüsse in Fernmeldewählnetzen**

(30) Priorität: 04.09.1995 DE 19532615
(71) Anmelder: PEITZ GmbH, 80686 München (DE)
(72) Erfinder: Peitz, Albert, 80686 München (DE)
(74) Vertreter: Bardehle, Heinz, Dipl.-Ing.

(57) **Zusammenfassung**

Die Erfindung betrifft ein Adressierungssystem für Anschlüsse in Fernmeldewählnetzen, bei dem pro Anschluß eine individuelle Rufnummer aus einem Vorrat von n-stelligen Rufnummern vergeben ist, wobei die einzelnen Rufnummern unterschiedliche Stellenzahlen aufweisen. Die einzelnen Rufnummern sind derart einzeln durch ein Abschlußsignal (Wahlendezeichen) abgeschlossen, daß Rufnummern mit gegenüber der größten Stellenzahl verminderter Stellenzahl (Kurzrufnummern) direkt einen Anschluß individuell bezeichnen und Rufnummern, die die verminderte Stellenzahl (Kurzrufnummer) und darüberhinaus weitere Stellen enthalten, soviele weitere Anschlüsse individuell bezeichnen, wie in demjenigen Rufnummernvorrat vorhanden sind, der sich der Rufnummer mit verminderter Stellenzahl (Kurzrufnummer) unterordnet.

## Beschreibung

Die Erfindung begeht sich auf ein Adressierungssystem für Anschlüsse in Fernmeldewählnetzen, bei dem pro Anschluß eine individuelle Rufnummer aus einem Vorrat von n-stelligen Rufnummern vergeben ist, wobei die einzelnen Rufnummern unterschiedliche Stellenzahlen aufweisen.

Durch die Verwendung von Rufnummern mit nur wenigen Stellen erhält man sogenannte Kurzrufnummern, die dem Teilnehmer die Möglichkeit geben, durch Wahl einer geringen Anzahl von Stellen den gewünschten Teilnehmer zu erreichen, wogegen bei der in einem Fernmeldewählnetz üblichen normalen Wahl, bei der z. B. in größeren Ortsnetzen 6 oder mehr Stellen zu wählen sind, der Teilnehmer momentan eine größere Anzahl von Stellen im Gedächtnis behalten muß. Derartige Kurzrufnummern werden vor allem für Notrufe (z.B. Polizei, Feuerwehr), Dienstanschlüsse (z.B. Auskunft) oder für Nebenstellenanlagen verwendet, die über das betreffende Fernmeldewählnetz erreichbar sind.

Die Verwendung solcher Kurzrufnummern führt in bekannten Fernmeldewählnetzen dazu, daß z.B. bei einer normalen Stellenzahl von z.B. 6 Stellen für die einzelnen Teilnehmer die Vergabe einer Kurzrufnummer, z.B. der Rufnummer "1", alle der der Rufnummer "1" untergeordneten mehrstelligen Rufnummern in dem betreffenden Fernmeldewählnetz nicht vergeben werden können, da in diesem Fall z.B. die Wahl von aufeinanderfolgenden Ziffern 1 und 2, und gegebenenfalls weiteren Ziffern also einer mehrstelligen Rufnummer, stets zu dem durch die Kurzrufnummer "1" bezeichneten Anschluß fuhren würde. Das gleiche gilt für sämtliche weiteren der Ziffer "1" untergeordneten mehrstelligen Rufnummern. Aufgrund dieser Art der Vergabe von Kurzrufnummern ergibt sich also ein Verlust an Rufnummern aus einem theoretisch vorhandenen Vorrat von n-stelligen Rufnummern. Das Ergebnis ist, daß z.B. die 40 Millionen Telekom-Kunden in Deutschland 268 Millionen Telefonnummern verbrauchen (siehe Zeitschrift "FOCUS" 19/1995 S. 293). Der theoretisch verfügbare Vorrat von Rufnummern wird also nur zu einem relativ geringen Prozentsatz ausgenutzt.

Der Erfindung liegt die Aufgabe zugrunde, das Adressierungssystem für die Anschlüsse in Fernmeldewählnetzen, wie es eingangs beschrieben ist, so zu gestalten, daß trotz Vergabe von Kurzrufnummern sämtliche in einem Vorrat von n-stelligen Rufnummern enthaltenen Rufnummern für die Adressierung von Anschlüssen des Fernmeldewählnetzes ausnutzbar sind. Erfindungsgemäß geschieht dies dadurch, daß die einzelnen Rufnummern derart einzeln durch ein Abschlußsignal (Wahlendezeichen) abgeschlossen sind, daß Rufnummern mit gegenüber der größten Stellenzahl verminderter Stellenzahl (Kurzrufnummern) direkt einen Anschluß individuell bezeichnen und Rufnummern, die die verminderte Stellenzahl (Kurzrufnummer) und darüberhinaus weitere Stellen enthalten, soviele weitere Anschlüsse individuell bezeichnen, wie in demjenigen Rufnummernvorrat vorhanden sind, der sich der Rufnummer mit verminderter Stellenzahl (Kurzrufnummer) unterordnet.

Aufgrund der Einfügung des Wahlendezeichens in das Adressierungssystem erhält eine Vermittlungsstelle eines solchen Fernmeldenetzes stets am Ende einer Rufnummer, unabhängig von deren Stellenzahl, ein Kriterium, aufgrund dessen entschieden werden kann, ob mit den empfangenen, jeweils zu einer Stelle einer Rufnummer gehörenden Ziffern endgültig ein Anschluß gemeint ist oder nicht. Die Wahl einer Kurzrufnummer, z.B. der Ziffer "1", führt also wegen des darauffolgenden Wahlendezeichens zu dem betreffenden Anschluß, z.B. einer Polizeidienststelle, während z.B. die Wahl der Ziffern 1,2 und 3 in Aufeinanderfolge mit anschließendem Wahlendezeichen den hierdurch bezeichneten Anschluß auswählt, ohne daß es zu einer Fehlwahl zu dem der alleinigen Ziffer "1" entsprechenden Anschluß kommen kann.

Das vorstehend gekennzeichnete Adressierungssystem weist darüberhinaus den Vorteil auf, daß bei einem beispielsweise betrachteten System mit einem Vorrat von 3-stelligen Rufnummern nicht nur 999 Teilnehmer bezeichnet werden können, sondern zusätzlich alle diejenigen Teilnehmer, die durch eine einstellige oder zweistellige Rufnummer bezeichnet werden. Dies entspricht gegenüber den 999 Teilnehmern einem Zuwachs um 11%. Im übrigen bleibt dabei die Zurverfügungstellung von Kurzrufnummern voll erhalten.

Heutige Telefonapparate sind regelmäßig mit 4 x 4 = 16 Tasten ausgestattet, von denen 10 Tasten für die Ziffern 1 bis 0 und einige weitere Tasten für geräteinterne Funktionen vorgesehen sind. Darüberhinaus ist heute schon die Notwendigkeit erkannt, weitere Tasten für eine Zeichenübermittlung zu Verfügung zu haben, die beispielsweise für die Umschaltung einer Teilnehmernummer zu einem anderen Anschluß notwendig sind (Anwesenheit des Teilnehmers bei einem fremden Anschluß). Um für einen solchen Fall einer Vermittlungsstelle eines Fernmeldewählnetzes die Möglichkeit zu geben, zwischen der Wahl einer Rufnummer und der Abgabe eines Sondersignals zu unterscheiden, ist es zweckmäßig, jeder Rufnummer ein Einleitungssignal (Wahlbeginnzeichen) voranzustellen. Wenn dann die Vermittlungsstelle ein solches Einleitungssignal erhält, ist sie für den Empfang der zu wählenden Rufnummer vorbereitet und kann diese verarbeiten.

Ein Endgerät (Telefon) für ein das erfindungsgemäße Adressierungssystem enthaltende Fernmeldewählnetz gestaltet man zweckmäßig so, daß es mit einer Wähltastatur versehen ist, die außer den Zifferntasten 1-10 eine weitere Taste für das Wahlendezeichen und wahlweise das Wahlbeginnzeichen aufweist. In einer mit 4 x 4 = 16 Tasten versehenen üblichen Wähltastatur sieht man dann außer Tasten für geräteinterne Funktionen eine weitere Taste für das Wahlendezeichen und wahlweise eine Taste für das Wahlbeginnzeichen vor. Der für die Bildung des Wahlendezeichens und des Wahlbeginnzeichens erforderliche Zeichenvorrat steht bei einem ISDN-Endgerät und bei Endgeräten mit Mehrfrequenz-Codewahl zur Verfügung.

Eine Schaltungsanordnung einer Adressierungseinrichtung einer Vermittlungsstelle zur Anwendung des erfindungsgemäßen Adressierungssytems gestaltet man zweckmäßig dadurch, daß den einzelnen Stellen der Rufnummern zugeordnete Bewertungseinrichtungen zur Erkennung von die einzelnen Stellen bildenden Ziffern und jeweils einer pro Bewertungseinrichtung vorgesehenen Erkennungseinrichtung für das Abschlußsignal (Wahlendezeichen) vorgesehen sind, die bei Empfang eines Abschlußsignals zu dem der betreffenden Rufnummer entsprechenden Anschluß durchschaltet oder bei Erhalt einer weiteren Stelle auf eine nächstfolgen de Bewertungseinrichtung weiterschaltet, bis ein Abschlußsignal die Durchschaltung zu dem der betreffenden Rufnummer entsprechenden Anschluß bewirkt.

In den Figuren sind verschiedene mögliche Anordnungen zur Ausführung der Erfindung dargestellt. Es zeigen:
- Figur 1: eine schematische Darstellung der Wähltastatur eines Endgerätes, z.B. Telefon- oder Telefaxgerät, für den Anschluß an ein Fernmeldewählnetz,
- Figur 2: die prinzipielle schaltungstechnische Gestaltung der Adressierungseinrichtung der Vermittlungsstelle eines Fernmeldewählnetzes,
- Figur 3: die in einem Rechner aufgegangene Adressierungseinrichtung eines rechnergesteuerten Fernmeldewählnetzes.

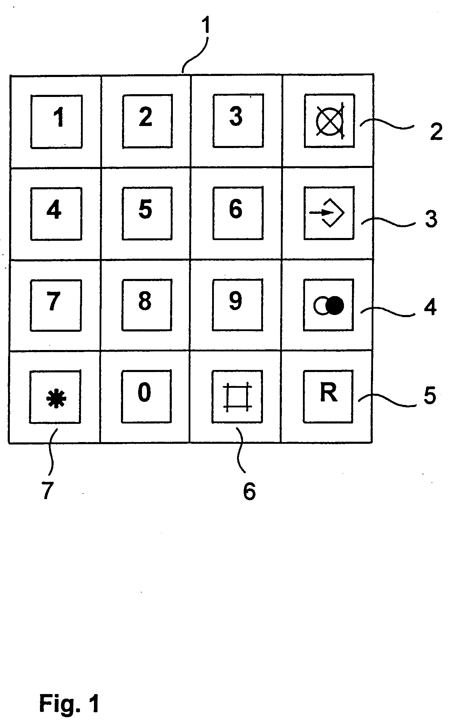

Figur 1 zeigt die Struktur einer bekannten Wahltastatur 1 eines Telefons, die die mit den Ziffern 1 bis 0 bezeichneten Wahltasten und darüberhinaus 6 Sondertasten 2-7 aufweist, von denen die Tasten 2-5 für geräteinterne Funktionen (z.B. Wahlwiederholung, Taste 4) vorgesehen sind. Die Tasten 6 und 7 dienen zur Abgabe des als Abschlußsignal dienenden Wahlendezeichens und des das Wahlbeginnzeichen darstellenden Einleitungssignals. Für die Durchführung einer Wahl wird unter Benutzung der Tastatur 1 zunächst die Taste 7 gedrückt (Wahlbeginnezeichen), woraufhin die die betreffende Rufnummer bildenden Zifferntasten betätigt und schließlich nach der letzten Zifferntaste die Taste 6 (Wahlendezeichens) betätigt wird.

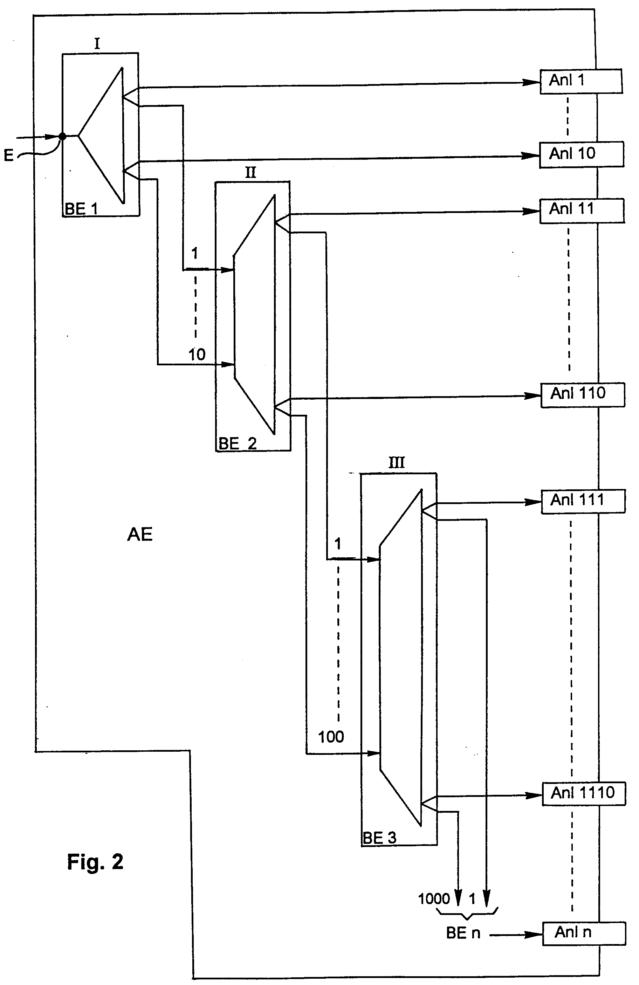

In der Figur 2 ist die prinzipielle schaltungstechnische Struktur einer Adressierungseinrichtung AE der Vermittlungsstelle eines das erfindungsgemäße Adressierungssystem verarbeitenden Fernmeldewählnetzes dargestellt. Der Adressierungseinrichtung AE werden über den Eingang E die von den Teilnehmern des betreffenden Fernmeldewählnetzes gewählten Rufnummern zugeführt, und zwar hier in Aufeinanderfolge der einzelnen Stellen jeder Rufnummer, die pro Stelle in einzelnen Bewertungseinrichtungen ausgewertet wird. Dargestellt sind die Bewertungseinrichtungen BE 1, BE 2 und BE 3, die je für eine Auswertung der einzelnen aufeinanderfolgenden Stellen vorgesehen sind, nämlich der Stellen I, II und III. Je nach Anzahl der in der in dem betreffenden Fernmeldewählnetz verwendeten maximalen Stellenzahl sind gegebenenfalls weitere Bewertungseinrichtungen in der gleichen Strukturierung, wie in Figur 2 dargestellt, vorgesehen. Dies ist durch das Bezugszeichen BEn dargestellt, womit der Bewertungseinrichtung BE 3 folgende weitere Bewertungseinrichtungen gemeint sind.

Jede Bewertungseinrichtung BE 1, BE 2, BE 3.... führt eine Unterscheidung zwischen den die einzelnen Stellen bildenden Ziffern und dem Abschlußsignal (Wahlendezeichen) durch. Nach Empfang der ersten Ziffer durch die Bewertungseinrichtung BE 1 führt diese ihre Auswertung durch und entscheidet daraufhin, ob eine Ziffer oder das Wahlendezeichen vorliegt. Im ersteren Falle schaltet sie die weiterhin am Eingang E empfangenen Ziffern zu der Bewertungseinrichtung BE 2 durch, im letzteren Falle identifiziert sie einen der Anschlüsse Anl 1 - Anl 10, je nach dem, welche Ziffer die erste Stelle der betreffenden Rufnummer bildet. Handelt es sich also um eine Rufnummer mit nur einer Stelle, also eine einstellige Kurzrufnummer, so wird unmittelbar nach Erkennung des der ersten Stelle folgenden Wahlendezeichens zu dem betreffenden Anschluß Anl 1 .... Anl 10 durchgeschaltet.

Im Falle einer der ersten Stelle folgenden Ziffer gelangt diese, wie vorstehend dargelegt, zu der Bewertungseinrichtung BE 2 (Stelle II) und wird hier einer Auswertung, wie im Falle der Auswertung durch die Bewertungseinrichtung BE 1, unterworfen, woraufhin die Bewertungseinrichtung BE 2 im Falle der Feststellung eines Wahlendezeichens einen der sie betreffenden Anschlüsse Anl 11 bis Anl 110 identifiziert und zu diesem durchschaltet (n-stellige Kurzrufnummer) oder im Falle der Feststellung einer folgenden Ziffer als dritter Stelle der betreffenden Rufnummer zu der Bewertungseinrichtung BE 3 durchschaltet (Stelle III), in der sich der gleiche Auswertungsvorgang, wie vorstehend dargelegt, abspielt. Dieser Vorgang wiederholt sich so lange, wie Ziffern der betreffenden Rufnummer an den Eingang E gelangen, wobei entweder jeweils von der betreffenden Bewertungseinrichtung BE 1.... BE 3 direkt ein zugeordneter Anschluß Anl 1 .... Anl 1110 (Kurzrufnummer) identifiziert wird oder zu einer folgenden Bewertungseinrichtung durchgeschaltet wird, bis diese die letzte Ziffer der betreffenden Rufnummer empfängt und damit den betreffenden, ihr zugeordneten Anschluß Anl n identifiziert.

Aufgrund der Funktion der Bewertungseinrichtung, die hier in einzelne Bewertungseinrichtungen BE 1 - BE 3 aufgeteilt ist, und der Unterscheidung zwischen den einzelnen Ziffern einer Rufnummer und dem Wahlendezeichen wird der gesamte Vorrat an n-stelligen Rufnummern ausgenutzt, die sämtlich individuell mittels der Adressierungseinrichtung AE identifiziert werden können.

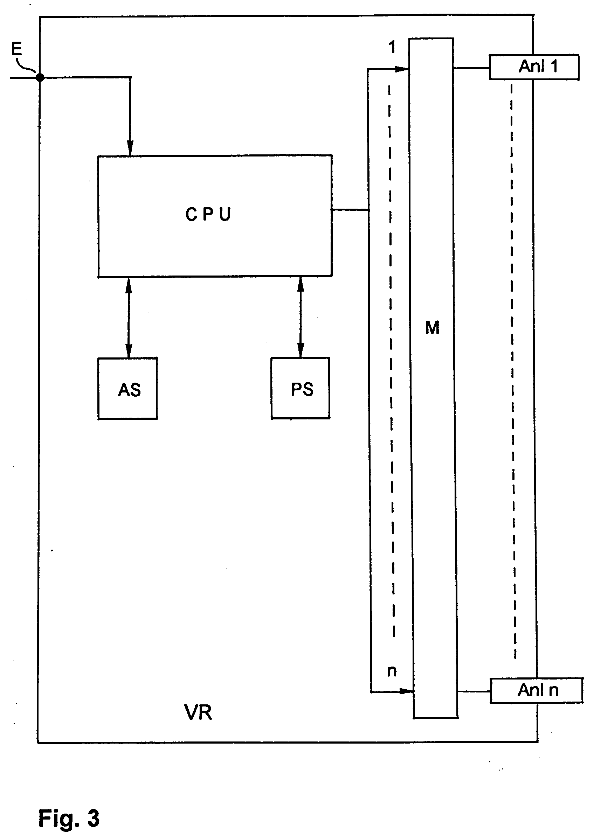

Bei der Fig. 3 handelt es sich um die Struktur einer rechnergesteuerten Vermittlungsanlage, in der die Identifizierungsvorgänge sowohl für die Herstellung der Verbindungen als auch für die Bewertung der einzelnen Ziffern durch den Vermittlungsrechner VR durchgeführt werden, der das Steuerwerk CPU, den Arbeitsspeicher AS und den Programmspeicher PS enthält. Hierbei handelt es sich um eine bekannte Struktur eines Vermittlungsrechners.

Wie bei der Anordnung gemäß Fig. 2 werden die von den einzelnen Teilnehmern gewählten Rufnummern am Eingang E empfangen. Von hier gelangen die Rufnummern zu dem Steuerwerk CPU und werden von dort im Arbeitsspeicher AS hinterlegt. Mittels des im Programmspeicher PS enthaltenen Programms führt dann das Steuerwerk CPU die Feststellung durch, ob es sich bei dem aus dem Arbeitsspeicher AS einzeln ihm zugeführten Signalen um Ziffern einer Rufnummer oder um ein Wahlendezeichen handelt. Erkennt das Steuerwerk CPU eine Ziffer, so führt sie mit der folgenden Ziffer und so fort die gleiche Bewertung durch, bis das Steuerwerk ein Wahlendezeichen feststellt, woraufhin das Steuerwerk in Zusammenwirken mit der im Arbeitsspeicher AS abgespeicherten, aufgenommen Rufnummer und der dem Programmspeicher PS entnommenen Programm die Identifizierung des betreffenden Teilnehmers durchführt und diese Identifizierung dem Markierer M zuleitet, der daraufhin die Durchschaltung zu dem betreffenden Anschluß Anl 1 ... Anl n veranlaßt.

Wenn bei diesem Vorgang das Steuerwerk CPU im Anschluß z.B. an die erste Stelle einer Rufnummer den Empfang eines Wahlende-Zeichens feststellt, so führt das Steuerwerk CPU in Zusammenwirken mit dem Arbeitsspeicher AS und dem Programmspeicher PS sofort eine Identifizierung des betreffenden Teilnehmers durch, was dann mittels des Markierers zu der Durchschaltung zu dem betreffenden Anschluß führt. Auf diese Weise wird entweder ein durch eine Kurzrufnummer bezeichneter Anschluß oder jeder andere Anschluß erreicht. Die sich dabei abspielenden Vorgänge entsprechen im Prinzip vollkommen denjenigen, wie sie in Zusammenhang mit der Fig. 2 beschrieben sind. Bei den Vermittlungsrechnern handelt es sich lediglich um eine rechnergesteuerte Gestaltung der in der Fig. 2 dargestellten stufenweise aufgebauten Adressiereinrichtung.

## Patentansprüche

1. Adressierungssystem für Anschlüsse in Fernmeldewählnetzen, bei dem pro Anschluß eine individuelle Rufnummer aus einem Vorrat von n-stelligen Rufnummern vergeben ist, wobei die einzelnen Rufnummern unterschiedliche Stellenzahlen aufweisen, **dadurch gekennzeichnet**, daß die einzelnen Rufnummern derart einzeln durch ein Abschlußsignal (Wahlendezeichen) abgeschlossen sind, daß Rufnummern mit gegenüber der größten Stellenzahl verminderter Stellenzahl (Kurzrufnummern) direkt einen Anschluß individuell bezeichnen und Rufnummern, die die verminderte Stellenzahl (Kurzrufnummer) und darüberhinaus weitere Stellen enthalten, soviele weitere Anschlüsse individuell bezeichnen, wie in demjenigen Rufnummernvorrat vorhanden sind, der sich der Rufnummer mit verminderter Stellenzahl (Kurzrufnummer) unterordnet.

2. Adressierungssystem nach Anspruch 1, **dadurch gekennzeichnet**, daß jeder Rufnummer ein Einleitungssignal (Wahlbeginnzeichen) vorangestellt ist.

3. Endgerät (Telefon) für ein das Adressierungssystem nach Anspruch 1 oder 2 enthaltendes Fernmeldewählnetz, **dadurch gekennzeichnet**, daß es mit einer Wähltastatur (1) versehen ist, die außer den Zifferntasten 1-10 eine weitere Taste für das Wahlendezeichen (6) und wahlweise das Wahlbeginnzeichen (7) aufweist.

4. Schaltungsanordnung einer Adressierungseinrichtung (AE) der Vermittlungsstelle eines das Adressierungssystem nach Anspruch 1 oder 2 enthaltenden Fernmeldewählnetzes, **gekennzeichnet durch** eine Bewertungseinrichtung (BE) zum Empfang von die einzelnen Stellen bildenden Ziffern und des Abschlußsignals (Wahlendezeichen) und zur Unterscheidung zwischen diesen Zeichen, die bei Empfang eines Abschlußsignals die Identifizierung des durch die betreffende Rufnummer gekennzeichneten Anschlußes (Anl 1 - Anl n) bewirkt.
